# FASCICULE DE BREVET EUROPEEN

(11) **EP 3 051 936 B1**
(45) Date de publication et mention de la délivrance du brevet: **26.08.2020**
(21) Numéro de dépôt: 14780853.9
(22) Date de dépôt: 03.10.2014
(51) Int. Cl.: A01B 79/00, A01B 69/00

(54) **MACHINE AGRICOLE DE REVISITE D'UNE PARCELLE PLANTÉE; PROCÉDÉ ASSOCIÉ**
LANDWIRTSCHAFTLICHE MASCHINE ZUR AUFBEREITUNG EINES BEPFLANZTEN GRUNDSTÜCKS UND ZUGEHÖRIGES VERFAHREN
AGRICULTURAL MACHINE FOR REVISITING A PLANTED PLOT; ASSOCIATED METHOD

(30) Priorité: 04.10.2013 FR 1359630
(43) Date de publication de la demande: 10.08.2016
(73) Titulaire: Centre National d'Etudes Spatiales, 75001 Paris (FR)
(72) Inventeur: LAURICHESSE, Denis, F-31170 Tournefeuille (FR)
(74) Mandataire: Delorme, Nicolas
(86) Numéro de dépôt international: PCT/EP2014/071271
(87) Numéro de publication internationale: WO 2015/049383

(56) Documents cités:
- DE-A1- 19 958 761
- DE-A1- 19 961 442
- FR-A1- 2 914 430
- US-A1- 2003 028 321
- US-A1- 2013 261 870
- US-B1- 6 199 000

## Description

La présente invention concerne une machine agricole de revisite d'une parcelle plantée.

Par revisite, on entend la réalisation d'une opération agricole sur une parcelle déjà plantée.

Il peut s'agir d'une opération associée à la culture de l'espèce déjà plantée sur la parcelle. Il s'agit par exemple de repasser entre les végétaux de l'espèce déjà plantée, dite première espèce, pour effectuer un binage ou un sarclage du sol, une pulvérisation d'un engrais, ou encore une opération de récolte des végétaux de la première espèce.

Il peut également s'agir d'une opération relative à la culture d'une seconde espèce sur la parcelle déjà plantée. Il s'agit par exemple de repasser entre les végétaux de la première espèce pour effectuer une opération liée à la culture des végétaux de la seconde espèce, telle que le semis de graines de la seconde espèce, le binage ou le sarclage du sol, la pulvérisation d'un engrais au pied des végétaux de la seconde espèce, etc.

Il peut également s'agir d'une opération de récolte des végétaux de la seconde espèce, sans récolter ceux de la première espèce. Ce type d'agriculture, dite mixte, où plusieurs espèces sont simultanément cultivées sur une même parcelle, présente un regain d'intérêt puisqu'elle est très avantageuse en termes de réduction de la quantité d'engrais utilisé, d'économie des sols, etc.

Le document DE 199 58 761 A1 divulgue une machine agricole comportant un moyen de géolocalisation autorisant l'actionnement d'un outil agricole de semis en un endroit précis d'une parcelle et la mémorisation de la position où une graine a été semée.

Le document DE 199 61 442 A1 divulgue une machine agricole de revisite comportant un moyen de géolocalisation permettant l'actionnement d'un outil de revisite en un endroit précis d'une parcelle plantée, en tenant compte de la position où une graine a été semée.

Le document EP 2 404 492 divulgue, pour le cas particulier d'une vigne, une machine agricole multifonctionnelle permettant notamment une revisite de la vigne pour une opération de binage du sol autour des pieds de vigne. L'outil de binage de la machine est actionné automatiquement autour des pieds de vigne en fonction d'un signal généré par un détecteur de proximité, qui évalue la distance entre l'outil et le pied de vigne.

Le fait que l'espèce déjà cultivée soit un pied de vigne permet l'utilisation d'un capteur de proximité. Mais, l'utilisation d'un capteur de proximité n'est pas généralisable à tout type de plantes.

De plus, un pied de vigne est assez robuste. Il autorise une erreur d'actionnement de l'outil de binage. Ceci n'est pas le cas pour une plante, telle que du maïs ou du blé, dont les tiges restent fragiles, surtout dans les premier mois de culture, lorsque ces plantes sont à l'état de pousses et que l'opération de revisite doit être réalisée.

Par ailleurs, le document US 2003/0009282 divulgue une machine agricole pour planter des graines, qui est équipée d'un moyen de positionnement par satellites du type « à cinématique temps réel », aussi dénommé RTK (selon l'acronyme anglais de « Real Time Kinematic »). En fonction de l'instant d'actionnement de l'outil permettant de planter une graine et de la position instantanée délivrée par le moyen de positionnement, un calculateur est propre à stocker la position de chaque graine plantée, dans une base de données.

Un moyen de positionnement par satellites RTK nécessite l'utilisation d'un récepteur de référence, au sol, dont la position est connue. Celle-ci est déterminée lors d'une étape initiale de calibration du moyen de positionnement par satellites.

Cependant, un moyen de positionnement par satellites du type RTK ne permet de déterminer une position qu'avec une précision de dix centimètres environ. Une telle précision n'est pas suffisante pour une opération de revisite.

De plus, un moyen de positionnement par satellites du type RTK présente une dérive temporelle importante. Cette dérive n'est pas acceptable dans le cas d'une machine agricole destinée à effectuer une opération de revisite après une période de temps de quelques semaines ou quelques mois. En effet, toute dérive dans le positionnement de l'outil de binage conduirait à venir travailler une zone au sol avec un risque élevé d'abimer les plantes cultivées qui s'y trouvent.

Pour utiliser un tel moyen de positionnement, il faudrait alors, au moment de la revisite, déterminer la position du récepteur de référence en exécutant à nouveau l'étape de calibration. Cette étape est fastidieuse. Elle devrait être mise en œuvre par l'opérateur de la machine agricole, ce qui serait source d'erreur. Enfin, il faudrait que, lors de la revisite, chaque mesure de position soit corrigée de l'écart entre la position du récepteur de référence au moment de la plantation et la position du récepteur de référence au moment de la revisite.

Il y a donc un besoin pour une machine agricole améliorée permettant d'effectuer simplement et automatiquement une opération liée à une revisite d'une parcelle plantée.

L'invention a pour but de répondre à ce besoin.

Pour cela l'invention porte sur une machine agricole de revisite et un procédé d'utilisation de cette machine conformes aux revendications.

L'invention et ses avantages seront mieux compris à la lecture de la description qui va suivre, donnée uniquement à titre d'exemple illustratif et non limitatif, et faite en se référant aux dessins annexés sur lesquels :
- la figure 1 est une représentation schématique d'une machine agricole ;
- la figure 2 est une représentation, sous forme de blocs, du procédé mis en œuvre par la machine de la figure 1 ; et,
- la figure 3 est une représentation schématique d'une variante de réalisation.

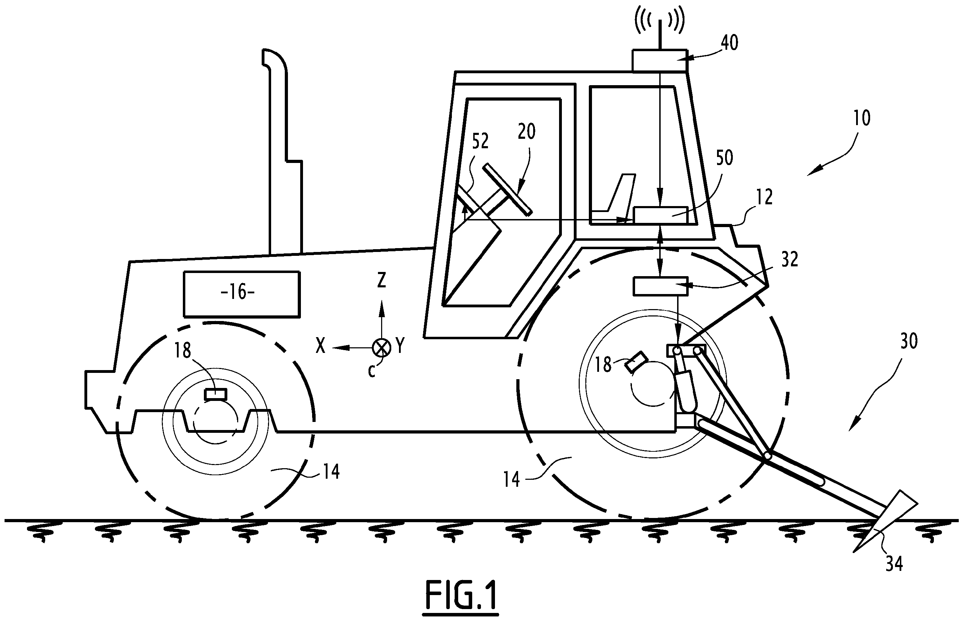

Une machine agricole de revisite 10 va être décrite en se référant à la figure 1.

La machine 10 comporte une caisse 12.

Comme pour tout véhicule, un repère XYZ est associé au centre géométrique C de la caisse 12 : l'axe X est un axe longitudinal, orienté vers l'avant de la caisse ; l'axe Y est un axe transversal, orientant la caisse 12 de droite à gauche ; et l'axe Z est un axe perpendiculaire aux axes X et Y, orienté vers le haut.

La machine 10 comporte des roues 14, couplées à des moyens de propulsion de traction, tels qu'un moteur 16, et de freinage, tels que des freins 18, et à des moyens de direction, désignés de manière générale par la référence 20 sur la figure 1.

Les moyens de propulsion et de direction sont conçus pour permettre à un conducteur de commander le déplacement de la machine 10 selon une trajectoire souhaitée.

En variante, les moyens de propulsion et de direction sont actionnés automatiquement par un module de pilotage de la machine. Celle-ci est alors entièrement automatisée et se comporte comme un robot, la trajectoire souhaitée le long de laquelle est déplacée la machine étant alors une trajectoire calculée.

La machine 10 comporte, monté à l'arrière de la caisse 12, un outil 30.

La machine 10 est multifonctionnelle et l'outil 30 est monté de manière amovible sur la caisse 12.

L'outil 30 est choisi en fonction de l'opération de revisite à réaliser. L'outil est choisi parmi un outil de binage, un outil de sarclage, un outil de ratissage, un outil pour semer des graines, un outil pour repiquer des plants, un outil de pulvérisation, un outil de récolte. L'outil 30 choisi est monté temporairement sur la caisse 12.

Dans le mode de réalisation représenté schématiquement sur les figures, l'outil 30 choisi est un outil de binage du sol.

La machine 10 comporte un module d'actionnement 32 de l'outil 40, propre à actionner l'outil 30 d'une manière prédéterminée. De préférence, le module d'actionnement 32 est propre à actionner l'outil 30 pour que celui-ci effectue un cycle de fonctionnement caractéristique. Pour le cas d'un outil de binage, le cycle de fonctionnement peut par exemple consister, par rapport à un point de référence au sol, à biner le sol suivant un premier segment puis suivant un second segment, croisant le premier à 90°.

Le mouvement de l'outil lors de son actionnement par le module d'actionnement 32 est entièrement déterminé. En particulier, la position et l'orientation de l'extrémité fonctionnelle 34 de l'outil 30 par rapport au centre C et au repère XYZ de la caisse 12 sont connues à chaque instant de l'actionnement de l'outil 30, en fonction de la position instantanée du point C, délivrée par le module de positionnement, et de l'état instantané du module d'actionnement 32. Ces informations sont mémorisées dans le module d'actionnement 32.

La machine 10 comporte un module 40 de positionnement par satellites propre à délivrer une position et une orientation absolue du point C et du repère XYZ de la machine avec une grande précision.

Les performances du positionnement par satellites sont augmentées par la prise en compte, par le module 40, des perturbations affectant la propagation des signaux de radionavigation émis par les satellites, qui sont induites par la ionosphère.

Par exemple, le module 40 est le module de positionnement par satellites précis, absolu et sans dérive décrit dans le document WO 2008/125458. Ce module de positionnement met en œuvre un algorithme dénommé «PPP avec résolution des ambiguïtés entières non différenciées », où l'acronyme « PPP » correspond à l'expression « Precise Point Positioning » en anglais.

Plus précisément, chaque satellite de la constellation de satellites diffuse un premier signal de radionavigation sur une première fréquence et un second signal de radionavigation sur une seconde fréquence distincte de la première.

Une station de référence, au sol, appartenant à un réseau de stations, traite les signaux de radionavigation provenant d'un des satellites visibles, de manière à déterminer des corrections, telles qu'un délai interne du satellite et une valeur entière de l'ambiguïté « widelane » pour la station de référence. Ce traitement prévoit :
- la réception des premier et second signaux de radionavigation ;
- une mesure de code non différentiée et une mesure de phase non-différentiée ;
- le calcul d'une valeur brute de l'ambiguïté de phase « widelane » ;
- la fixation d'un délai interne du satellite ainsi que la valeur entière de l'ambiguïté de phase « widelane » pour la station de référence.

Les corrections ainsi déterminées sont transmises à des moyens de diffusion vers les modules de positionnement par satellites des utilisateurs finaux.

Un module de positionnement par satellites effectue alors le traitement suivant :
- recevoir les premier et second signaux de radionavigation d'un satellite visible de la constellation de satellites ;
- effectuer, pour chacun des premier et second signaux reçus, une mesure de code non-différentiée et une mesure de phase non-différentiée ;
- calculer une valeur brute de l'ambiguïté de phase « widelane » à partir des mesures non-différentiées de code et des mesures non-différentiées de phase ;
- acquérir un délai interne du satellite et déterminer une valeur entière de l'ambiguïté « widelane » sur base de ladite valeur brute et ledit délai interne de satellite.

Outre le délai interne du satellite, d'autres corrections relatives au satellite visible par le récepteur peuvent être calculées par les stations de référence, transmises au module utilisateur et utilisées par ce dernier pour la détermination précise, de l'ordre du centimètre, et absolue de sa position instantanée.

Le module peut acquérir les corrections relatives à chaque satellite visible à partir d'une base de données, par exemple accessible via l'Internet. Le module est alors équipé d'un moyen de connexion sans fil, pour établir une liaison avec une station de base d'une infrastructure de radiocommunication reliée à l'Internet.

Le module peut également acquérir les corrections relatives à chaque satellite visible en captant des messages adaptés, diffusés par des satellites SBAS (pour « Satellite-Based Augmentation System »).

En variante et plus généralement, il est possible de faire d'autres combinaisons « widelane » et/ou « narrowlane » pour déterminer les corrections au niveau des stations de référence, tant pour des récepteurs bi-fréquences que tri-fréquences, comme cela est par exemple décrit dans le brevet EP 2 335 085 B1.

En tout état de cause, le module 40 est un module bi-fréquence pour pouvoir recevoir les premier et second signaux de radionavigation.

La machine 10 comporte un calculateur 50 comportant un moyen de calcul, tel qu'un processeur, et des moyens de mémorisation, telle qu'une mémoire vive et une mémoire morte ainsi qu'une interface d'entrée/sortie.

Le calculateur 50 est relié au module de positionnement 40, au module d'actionnement 32 de l'outil 30, et à un écran 52, par exemple tactile, constituant une interface homme/machine utilisable par le conducteur de la machine 10.

Le calculateur 50 stocke en particulier un plan de revisite de la parcelle, comme cela sera présenté ci-dessous en relation avec le procédé d'utilisation de la machine 10. Le plan de revisite comporte une pluralité de points géographiques de revisites, autour de chacun desquels l'opération de revisite doit être réalisée.

Le calculateur 50, à partir d'un plan de revisite, est propre à élaborer, en ligne ou hors ligne, un parcours à travers la parcelle que la machine 10 doit suivre pour permettre à l'outil d'effectuer l'opération de revisite autour de chacun des points de revisite.

Le parcours élaboré par le calculateur 50 est affiché sur l'écran 52 placé dans la cabine pour indiquer au conducteur de la machine 10 comment il doit piloter la machine.

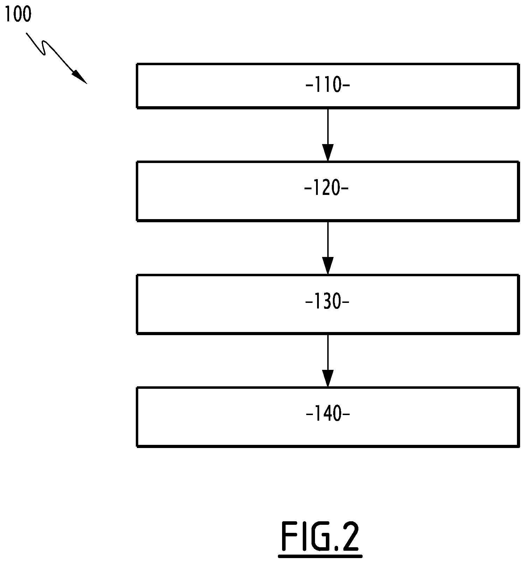

Comme représenté sur la figure 2, le procédé 100 comporte une étape 110 consistant à effectuer un repérage d'une parcelle à cultiver. Au cours de cette étape, l'exploitant mesure différents paramètres qui peuvent influencer la manière d'exploiter cette parcelle. Ainsi, certains paramètres, tels que par exemple la pente de la parcelle, son ensoleillement au cours de l'année, la pluviométrie au cours de l'année, l'humidité du sol à différentes profondeurs et pour différentes périodes de l'année, la qualité du sol, etc., sont mesurés.

Le procédé 100 se poursuit par une étape 120 consistant à déterminer un plan d'exploitation de la parcelle. Cette étape est avantageusement mise en œuvre sur un ordinateur personnel, qui exécute un programme applicatif d'aide à l'exploitation.

L'exploitant détermine d'abord s'il souhaite cultiver une ou plusieurs espèces sur la parcelle considérée et la nature des première et éventuellement seconde espèce(s) à cultiver.

Le plan d'exploitation est ensuite optimisé en déterminant la forme et l'orientation des rangées de plantes sur la parcelle, la distance entre les rangées des plantes de la première espèce, le pas entre les plantes de la première espèce le long d'une rangée, les instants de l'année pour effectuer les différentes opérations liées à la culture de la première espèce, du semis des graines à la récolte finale. Ces informations sont mémorisées dans le plan d'exploitation.

Si l'exploitant choisi de cultiver deux espèces simultanément sur la parcelle, le plan d'exploitation est optimisé en déterminant des informations similaires pour les plantes de la seconde espèce. L'optimisation du plan d'exploitation pour la première espèce et celle pour la seconde espèce sont réalisées simultanément, car les positions des plante de la première espèce influence les positions des plantes de la seconde espèce, et inversement.

Puis, dans une étape 130, les graines de la première espèce sont semées.

Avantageusement, la machine 10 est utilisée, mais avec un outil 30 permettant de semer des graines.

Un plan de semis est extrait du plan d'exploitation. Le plan de semis donne les points géographiques de la parcelle où des graines de la première espèce doivent être semées.

Le plan de semis est chargé dans la mémoire du calculateur 50 de la machine 10. Les paramètres de fonctionnement de l'outil 30 courant sont également chargés dans la mémoire du calculateur 50.

Le calculateur 50 détermine un parcours que doit suivre la machine 10 pour que l'outil 30 puisse planter des graines de la première espèce en chacun des points du plan de semis.

Ce parcours est affiché en cabine afin que le conducteur de la machine 10 puisse piloter la machine de manière à suivre au plus près ce parcours. A chaque instant, le module de positionnement par satellites délivre la position instantanée du point C de la machine, et le calculateur 50 détermine l'écart entre la position de la machine et le parcours à suivre, le conducteur étant invité à piloter la machine pour réduire cet écart.

La machine 10 se déplace sur la parcelle de manière à ce que l'outil suive une trajectoire passant à l'aplomb de chaque point indiqué dans le plan de semis.

Lorsque le module de positionnement 40 délivre une position absolue qui, corrigée par le calculateur 50 d'un décalage géométrique entre le centre C de la machine 10 et la partie fonctionnelle de l'outil 30, correspond à un point du plan de semis, le calculateur 30 émet un signal vers le moyen d'actionnement 32 afin que l'outil 30 sème une graine. Celle-ci est alors précisément semée au point dont la position est indiquée dans le plan de semis.

Le procédé se poursuit par une étape 140 consistant à revisiter la parcelle quelques semaines ou mois après l'étape 130 de semis de la première espèce. La parcelle est donc à cet instant déjà plantée.

Par exemple, l'opération de revisite de la parcelle plantée consiste à biner le sol autour des plantes de la première espèce ayant été semée à l'étape 130.

L'exploitant monte un outil 30 sur la caisse 12 de la machine 10 en fonction de l'opération de revisite à réaliser. Ici, un outil 30 de binage est fixé à la caisse 12.

Un plan de revisite est extrait du plan d'exploitation.

Pour le cas d'une opération consistant à biner le sol autour des plantes de la première espèce, le plan de revisite correspond au plan de semis, c'est-à-dire au plan de la parcelle sur lequel ont été reportées les positions absolues où chaque graine de la première espèce a été semée.

Le plan de revisite est stocké dans le calculateur 50 ainsi que les paramètres de fonctionnement de l'outil 30 de binage.

Le calculateur 50 génère un parcours de la machine 10 à travers la parcelle, tel que l'outil 30 puisse biner le sol autour de chaque point indiqué dans le plan de revisite, tout en évitant d'abîmer les plantes de la première espèce.

Le parcours généré par le calculateur 50 est affiché en cabine afin que le conducteur suive le parcours calculé.

La machine 10 est déplacée à travers la parcelle de sorte que l'outil 30 passe successivement au voisinage de chacun des points de revisite indiqués dans le plan de revisite.

Alors que la machine 10 circule sur la parcelle, le module de positionnement 40 délivre la position absolue du centre C et l'orientation absolue du repère XYZ de la machine 10.

En tenant compte d'un décalage géométrique entre le centre C de la machine 10 et la partie fonctionnelle 34 de l'outil 30, le calculateur 50 détermine la position absolue du point du sol à l'aplomb duquel se situe la partie fonctionnelle de l'outil à l'instant courant.

A chaque fois que le calculateur 50 détermine que l'outil 30 se trouve au voisinage d'un point de revisite, le calculateur 50 émet un signal adapté vers le moyen d'actionnement 32.

Lors de la réception de ce signal, le moyen d'actionnement 32 actionne l'outil 30 pour qu'il effectue un cycle de fonctionnement autour d'un point de référence qui coïncide à cet instant avec le point de revisite considéré.

L'outil 30 bine alors une zone au sol qui, de fait, se situe autour du point où est plantée une plante de la première espèce.

La machine 10 est pilotée à travers la parcelle pour effectuer l'intégralité de l'opération de revisite.

En variante, l'opération de binage peut être menée en binant le sol de manière continue en croisant les passes, chaque passe étant effectuée selon une ligne suivant au plus près un ensemble de points où sont plantées les plantes de la première espèce.

Dans encore une autre variante, l'opération de revisite est liée à la culture d'une seconde espèce. Par exemple, l'opération de revisite de la parcelle plantée consiste à semer des graines de la seconde espèce entre les plantes de la première espèce ayant été semée à l'étape 130.

L'exploitant monte un outil sur la caisse 12 de la machine 10 adapté au semis des graines de la seconde espèce.

Un plan de revisite est extrait du plan d'exploitation.

Le plan de revisite correspond alors aux points géographiques de la parcelle où doivent être plantées des graines de la seconde espèce.

Le plan de revisite est chargé dans le calculateur 50 de la machine 10.

A partir du plan de revisite, le calculateur 50 élabore un parcours à travers la parcelle permettant à l'outil de semis de passer à l'aplomb de chaque point de revisite, sans que la machine ou l'actionnement de l'outil n'abîmer les plantes de la première espèce.

Alors que la machine 10 circule sur la parcelle, le module de positionnement 40 délivre la position absolue du centre C et l'orientation absolue du repère XYZ de la machine 10.

En tenant compte d'un décalage géométrique entre le centre C de la machine 10 et la partie fonctionnelle de l'outil de semis, le calculateur 50 détermine la position absolue du point du sol à l'aplomb duquel se situe la partie fonctionnelle de l'outil de semis à l'instant courant.

A chaque fois que le calculateur 50 détermine que l'outil de semis se trouve à l'aplomb d'un point de revisite, le calculateur 50 émet un signal adapté vers le moyen d'actionnement de l'outil de semis.

Lors de la réception de ce signal, le moyen d'actionnement actionne l'outil de semis pour qu'il effectue un cycle de fonctionnement autour d'un point de référence qui coïncide à cet instant avec le point de revisite considéré.

L'outil de semis plante une graine en un point qui, de fait, coïncide avec le point de revisite.

Une première opération de revisite peut être suivie d'autres opérations de revisite. Par exemple, après avoir semé une seconde espèce, une autre opération de revisite pourrait consister à biner le sol autour des plantes de la première espèce et/ou des plantes de la seconde espèce. Un plan de revisite adapté est extrait du plan d'exploitation, qui comporte, en tant que point de revisite, les points où les graines des première et seconde espèces ont été semées.

Une opération de revisite peut également consister à récolter les plantes de la première (respectivement seconde) espèce sans toucher celles de la seconde (respectivement première) espèce.

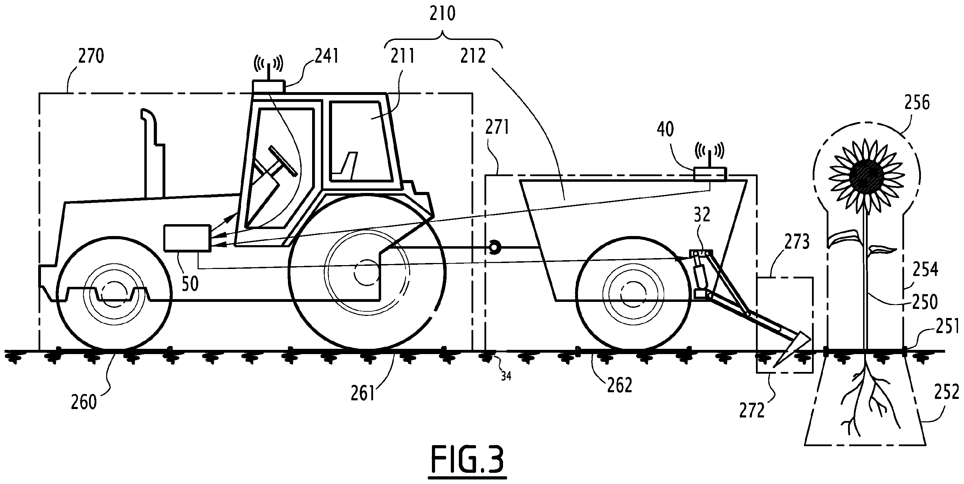

Dans un autre mode de réalisation représenté à la figure 3, la machine agricole 210 est constituée d'un tracteur 211 et d'une remorque 212, attelée au tracteur. La remorque est par exemple attelée par l'intermédiaire d'une rotule, de sorte que les différentes parties de la machine 210 sont articulées l'une par rapport à l'autre.

L'outil de revisite étant porté par la remorque 212, le module de positionnement par satellites 40 est alors implanté sur la remorque pour obtenir une mesure à chaque instant du positionnement de l'outil.

Cependant, il est souhaitable que, au cours de la revisite de la parcelle plantée, non seulement l'outil réalise l'opération associée à la revisite, mais également que la machine dans son ensemble n'abîme pas les plantes 250 déjà plantée sur la parcelle à travers laquelle le véhicule doit circuler.

Dans une première variante, seule l'empreinte au sol de la machine 210 est considérée.

La forme de l'empreinte au sol du tracteur et celle de la remorque sont prédéterminées. Elle correspond à l'empreinte 260 des roues avant du tracteur 211, de l'empreinte 261 des roues arrière du tracteur 211, de l''empreinte 262 des roues de la remorque 212.

Par ailleurs, à chaque plante 250 déjà plantée est associée une empreinte au sol 251. Par exemple, pour une graine de tournesol plantée en un point particulier P de la parcelle, est associée une empreinte de la plante, correspondant par exemple à un disque centré sur le point P et ayant un rayon prédéfini.

Le parcours que doit suivre le tracteur pour que l'outil, porté par la remorque tractée, passe par les points de revisite du plan de revisite est déterminé en tenant compte de la contrainte selon laquelle, en chaque point de ce parcours, l'empreinte au sol de la machine ne doit pas recouvrir une partie de l'empreinte d'une plante déjà plantée.

Le parcours optimal ainsi calculé est ensuite chargé dans la mémoire du calculateur 50 embarqué à bord de la machine 210, de préférence à bord du tracteur 211. Puis, le tracteur circule à travers la parcelle en suivant le parcours optimal. Régulièrement, l'outil porté par la remorque tractée est actionné pour réaliser l'opération de revisite.

Dans une seconde variante, l'empreinte stérique de la machine est considérée, c'est-à-dire son volume, ou tout au moins un gabarit à l'intérieur duquel s'inscrit son volume. Ce gabarit comporte une partie au-dessus du sol et une partie au-dessous du niveau du sol : la partie au-dessus du sol correspond au gabarit du tracteur 270, au gabarit de la remorque 271 et à la partie du gabarit de l'outil au-dessus du sol 273 ; la partie au-dessous du sol correspond à la partie du gabarit de l'outil au-dessous du sol 272, par exemple lorsque l'outil est actionné et s'enfonce dans le sol sur une profondeur prédéterminée.

Les empreintes stériques du tracteur, de la remorque et de l'outil sont prédéterminées. Leurs positions relatives au cours des différents mouvements possibles de la machine 210 et de l'actionnement de l'outil permettent de définir l'empreinte stérique de la machine.

Par ailleurs, à chaque plante 250 déjà plantée est associée une empreinte stérique. Par exemple, pour une graine de tournesol plantée en un point particulier P de la parcelle, est associée une empreinte correspondant par exemple à la réunion d'un cylindre 254 pour la tige (centré sur le point, ayant un rayon prédéfini et une hauteur prédéfinie), d'une sphère 256 correspondant à la fleur (à une extrémité supérieure de la tige), et d'un cône 252 correspondant aux racines de la plante (le sommet du cône coïncidant avec l'extrémité inférieure du cylindre de la tige).

Le parcours que doit suivre le tracteur pour que l'outil, porté par la remorque tractée, passe par les points de revisite du plan de revisite est déterminé en tenant compte de la contrainte selon laquelle, en chaque point de ce parcours, l'empreinte stérique de la machine ne doit pas interférer avec une empreinte stérique d'une plante déjà plantée.

Le parcours optimal ainsi calculé est ensuite chargé dans la mémoire du calculateur embarqué à bord du tracteur. Puis, le tracteur circule à travers la parcelle en suivant le parcours optimal. Régulièrement, l'outil porté par la remorque tractée est actionné pour réaliser l'opération de revisite.

Pour vérifier que le tracteur suit effectivement le parcours optimal calculé, il est nécessaire de connaître son positionnement à chaque instant.

Pour ce faire, le tracteur peut également être équipé d'un module de positionnement par satellites 241, bi-fréquence, propre à prendre en compte des corrections relatives aux perturbations affectant la propagation des signaux de radionavigation émis par chacun des satellites de radionavigation visibles et qui sont induites par la ionosphère, de manière à déterminer une position absolue et précise d'un point caractéristique du tracteur. De cette manière, il est possible de mesurer à chaque instant, un positionnement absolu du tracteur. Si ce positionnement du tracteur ou celui de la remorque s'écarte du parcours optimal à suivre, une correction adaptée est appliquée aux moyens de pilotage du déplacement du tracteur. Le module de positionnement de la remorque permet de déterminer à quel instant l'outil passe à l'aplomb d'un point de revisite, afin de commander le module d'actionnement de l'outil et ainsi réaliser l'opération de revisite correspondante.

Dans une alternative, le positionnement instantané du tracteur est déterminé en utilisant un modèle cinématique de l'ensemble formé par le tracteur et la remorque outillée. Ce modèle permet de déterminer le positionnement instantané du tracteur, à partir du positionnement instantané de la remorque et éventuellement de ses positionnements passés, délivré par le module de positionnement par satellites dont la remorque est équipée.

Dans encore une autre alternative, intermédiaire entre les deux alternatives précédentes, si la remorque est munie d'un module de positionnement par satellites, le tracteur est simplement muni d'une centrale inertielle. Celle-ci délivre périodiquement des mesures de la position et/ou de la vitesse du tracteur par rapport à une position et une vitesse de calibration de la centrale inertielle. Par exemple, la calibration s'effectue à vitesse nulle et alors que la remorque est alignée avec le tracteur. En corrigeant la position délivrée par le module de positionnement par satellites d'une quantité prédéterminée, qui correspond à la distance vectorielle entre la centrale inertielle et le module de positionnement par satellites, la position de calibration de la centrale inertielle peut être déterminée.

Ainsi, comme indiqué ci-dessus, il est possible de contrôler le déplacement du tracteur afin de permettre à l'outil d'effectuer l'opération de revisite conformément au plan de revisite, tout en évitant que la machine n'abîme les plantes déjà plantées.

Le parcours optimal que doit suivre la machine est calculé, au sol, hors ligne, par un système adapté, ou bien par le calculateur embarqué à bord de la machine. Dans ce dernier cas, l'estimation du parcours peut être faite hors ligne, par exemple avant de débuter l'opération de revisite, soit en ligne (c'est-à-dire en temps réel) au cours de l'opération de revisite. Cette dernière solution offre la possibilité de prendre en compte les mouvements réels de la machine.

## Revendications

1. Machine agricole de revisite (10) pour réaliser une opération de revisite d'une parcelle plantée, comportant un outil (30) actionné par un module d'actionnement (32),
qui comporte un calculateur (50) propre à comparer la position absolue de l'outil et une position absolue d'un point de revisite courant, sélectionné parmi des points de revisite d'un plan de revisite stocké dans des moyens de mémorisation du calculateur, le calculateur étant propre à commander le module d'actionnement en fonction de la distance relative entre la position absolue de l'outil et la position absolue du point de revisite courant,
et dont le calculateur (50) est propre à déterminer un parcours permettant un déplacement de la machine à travers la parcelle de manière à ce que l'outil puisse effectuer l'opération de revisite pour chaque point du plan de revisite,
**caractérisée en ce qu'**elle comporte un module de positionnement par satellites (40), bi-fréquence, propre à prendre en compte des corrections relatives aux perturbations affectant la propagation des signaux de radionavigation émis par chacun des satellites de radionavigation visibles et qui sont induites par la ionosphère, de manière à déterminer, à chaque instant, une position absolue et précise au centimètre près de l'outil.

2. Machine (10) selon la revendication 1, dans laquelle l'outil (30) est un outil pour biner, et en ce que ledit plan de revisite comporte une pluralité de points de revisite, chaque point de revisite correspondant à un point de la parcelle où une plante d'une première espèce végétale a été plantée, et en ce que le calculateur (30) est propre à commander le module d'actionnement (32) de l'outil (30) pour biner le sol autour d'un point de revisite courant sélectionné dans le plan de revisite.

3. Machine (10) selon la revendication 1, **caractérisée en ce que**, une première espèce végétale ayant été plantée sur la parcelle, l'outil est un outil pour semer une graine d'une seconde espèce végétale, et **en ce que** chacun des points de revisite correspond à un point de la parcelle où doit être semée une graine de la seconde espèce.

4. Machine (10) selon l'une quelconque des revendications 1 à 3, **caractérisée en ce que** le calculateur (50) est propre à sélectionner le point de revisite courant du plan de revisite en fonction d'un parcours suivi par la machine (10) à travers la parcelle.

5. Machine selon la revendication 1, dans laquelle le parcours est déterminé sous contrainte, la contrainte consistant à imposer, qu'en tout point du parcours une empreinte de la machine (260, 261, 262 ; 270, 271, 272, 273) n'interfère pas avec une empreinte (251 ; 252, 254, 256) associée à une plante déjà plantée.

6. Machine selon la revendication 5, dans laquelle l'empreinte de la machine et l'empreinte associée à une plante déjà plantée sont du type empreinte au sol ou empreinte stérique.

7. Machine (10) selon l'une quelconque des revendications 1 à 6, dans laquelle le module de positionnement par satellites (40) intègre un moyen d'acquisition des corrections diffusées par un réseau de stations de référence.

8. Machine (10) selon la revendication 7, dans laquelle le module de positionnement par satellites (40) met en œuvre un algorithme de traitement de signaux de radionavigation du type PPP avec résolution des ambiguïtés entières non différenciées.

9. Machine selon l'une quelconque des revendications précédentes, comportant un tracteur et une remorque, attelée au tracteur, la remorque portant l'outil, le module d'actionnement de l'outil et le module de positionnement par satellites, le tracteur comportant, pour la détermination de son positionnement, un autre module de positionnement par satellites, une centrale inertielle ou un calculateur prenant en entrée les mesures effectuée par le module de positionnement par satellite équipant la remorque et mettant en œuvre un modèle cinématique de la machine formée du tracteur et de la remorque.

10. Système comportant :
- un moyen de calcul propre à élaborer un plan d'exploitation d'une parcelle et à extraire dudit plan d'exploitation un plan de semis et un plan de revisite ;
- une première machine propre à semer une graine d'une première espèce conformément au plan de semis ; et,
- une seconde machine, conforme à celle définie par l'une quelconque des revendications 1 à 9, propre à effectuer une opération de revisite de la parcelle plantée, conformément au plan de revisite.

11. Système selon la revendication 10, comportant un moyen de détermination sous contrainte d'un parcours que doit suivre la seconde machine pour effectuer l'opération de revisite, la contrainte consistant à imposer, qu'en tout point du parcours, une empreinte de la machine n'interfère pas avec une empreinte associée à une plante déjà plantée.

12. Procédé pour l'agriculture, qui comporte, pour effectuer une revisite d'une parcelle plantée d'une première espèce, les points géographiques où des plantes de la première espèce ont été plantées étant connus ;
- une étape d'élaboration d'un plan de revisite de la parcelle plantée en fonction de l'opération agricole à effectuer lors de la revisite et des points géographiques où des plantes de la première espèce ont été plantées étant connus, le plan de revisite comportant une pluralité de points géographiques de revisite ; et,
- une étape de revisite, au moyen d'une machine agricole (10) équipée d'un outil (30) adapté et actionné automatiquement par un module d'actionnement (32), consistant, à chaque instant, à déterminer une position absolue et précise au centimètre près de l'outil, en mettant en œuvre un traitement des signaux de radionavigation reçus, qui prend en compte des corrections relatives aux perturbations affectant la propagation des signaux de radionavigation émis par les satellites de radionavigation visibles et qui sont induites par la ionosphère, et à commander l'unité d'actionnement en fonction de la position absolue de l'outil et d'un point géographique de revisite courant, sélectionné dans le plan de revisite :
- une étape de détermination d'un parcours permettant un déplacement de la machine à travers la parcelle de manière à ce que l'outil puisse effectuer l'opération de revisite pour chaque point du plan de revisite.

13. Procédé selon la revendication 12, **caractérisé en ce que**, l'outil étant un outil (30) pour biner, les points de revisite du plan de revisite correspondent à des points où des plantes de la première espèce ont été plantées, et l'étape de revisite consiste à actionner l'outil pour biner le sol autour de chacun des points de revisite.

14. Procédé selon la revendication 12, **caractérisé en ce que**, l'outil étant un outil pour semer, les points de revisite du plan de revisite correspondent à des points géographiques où des graines d'une seconde espèce doivent être semées, et **en ce que** l'étape de revisite consiste à semer des graines de la seconde espèce en chacun des points de revisite.

15. Procédé selon l'une quelconque des revendications 12 à 14, **caractérisé en ce qu'**il comporte une étape de définition d'un plan d'exploitation d'une parcelle, une étape de plantation de la première espèce selon un plan de semis extrait du plan d'exploitation, et au moins une étape de revisite selon un plan de revisite extrait du plan d'exploitation.

16. Procédé selon l'une quelconque des revendications 12 à 15, comportant une étape de détermination d'un parcours optimal de revisite devant être suivi par la machine pour que l'outil effectue l'opération agricole requise, étape au cours de laquelle est pris en compte la contrainte selon laquelle, en tout point du parcours, une empreinte de la machine ne doit pas interférer avec une empreinte associée à une plante déjà plantée.

## Patentansprüche

1. Landwirtschaftliche Aufbereitungsmaschine (10) zur Durchführung eines Aufbereitungsvorgangs eines bepflanzten Grundstücks, ein Werkzeug (30) beinhaltend, das durch ein Betätigungsmodul (32) betätigt wird, das einen Rechner (50) beinhaltet, der dazu vorgesehen ist, die absolute Position des Werkzeugs und eine absolute Position eines laufenden Aufbereitungspunktes zu vergleichen, der aus den Aufbereitungspunkten eines Aufbereitungsplans ausgewählt wird, der in Speichermitteln des Rechners abgelegt ist, wobei der Rechner dazu vorgesehen ist, das Betätigungsmodul in Abhängigkeit vom relativen Abstand zwischen der absoluten Position des Werkzeugs und der absoluten Position des laufenden Aufbereitungspunktes zu steuern,
und deren Rechner (50) dazu vorgesehen ist, eine Fahrstrecke zu bestimmen, die eine Fortbewegung der Maschine über das Grundstück derart ermöglicht, dass das Werkzeug einen Aufbereitungsvorgang für jeden Punkt des Aufbereitungsplans durchführen kann,
**dadurch gekennzeichnet, dass** sie ein Satelliten-Positionierungsmodul (40) mit zwei Frequenzen beinhaltet, das dazu vorgesehen ist, Korrekturen in Bezug auf Störungen zu berücksichtigen, die die Ausbreitung der Funknavigationssignale, die von jedem der sichtbaren Funknavigationssatelliten ausgegeben werden, treffen, und die durch die Ionosphäre induziert werden, um zu jedem Zeitpunkt eine absolute und auf den Zentimeter genaue Position des Werkzeugs zu bestimmen.

2. Maschine (10) nach Anspruch 1, wobei das Werkzeug (30) ein Werkzeug zum Auflockern ist, und dadurch das der Aufbereitungsplan eine Vielzahl von Aufbereitungspunkten beinhaltet, wobei jeder Aufbereitungspunkt einem Punkt des Grundstücks entspricht, an dem eine Pflanze einer ersten Pflanzenspezies gepflanzt worden ist, und dadurch, dass der Rechner (30) dazu vorgesehen ist, das Betätigungsmodul (32) des Werkzeugs (30) zu steuern, um den Boden um einen laufenden Aufbereitungspunkt herum aufzulockern, der in dem Aufbereitungsplan ausgewählt wird.

3. Maschine (10) nach Anspruch 1, **dadurch gekennzeichnet, dass** das Werkzeug, wenn eine erste Pflanzenspezies auf dem Grundstück gepflanzt worden ist, ein Werkzeug zum Säen eines Saatkorns einer zweiten Pflanzenspezies ist, und dadurch, dass jeder der Aufbereitungspunkte einem Punkt des Grundstücks entspricht, an dem ein Saatkorn der zweiten Spezies zu säen ist.

4. Maschine (10) nach einem der Ansprüche 1 bis 3, **dadurch gekennzeichnet, dass** der Rechner (50) dazu vorgesehen ist, den laufenden Aufbereitungspunkt des Aufbereitungsplans in Abhängigkeit von einer Fahrstrecke auszuwählen, die von der Maschine (10) über das Grundstück verfolgt wird.

5. Maschine nach Anspruch 1, wobei die Fahrstrecke unter einer Einschränkung bestimmt wird, wobei die Einschränkung darin besteht, durchzusetzen, dass an jedem Punkt der Fahrstrecke eine Spur der Maschine (260, 261, 262; 270, 271, 272, 273) in keine Spur (251; 252, 254, 256) eingreift, die einer bereits gepflanzten Pflanze zugewiesen ist.

6. Maschine nach Anspruch 5, wobei die Spur der Maschine und die einer bereits gepflanzten Pflanze zugewiesene Spur vom Typ Spur am Boden oder einer sterischen Spur sind.

7. Maschine (10) nach einem der Ansprüche 1 bis 6, wobei das Satelliten-Positionierungsmodul (40) ein Mittel zum Erfassen der Korrekturen integriert, die durch ein Netzwerk an Referenzstationen ausgestrahlt werden.

8. Maschine (10) nach Anspruch 7, wobei das Satelliten-Positionierungsmodul (40) einen Algorithmus zur Verarbeitung von Funknavigationssignalen vom Typ PPP samt Auflösung ganzer, nicht differenzierter Mehrdeutigkeiten umsetzt.

9. Maschine nach einem der vorstehenden Ansprüche, einen Traktor und einen Anhänger beinhaltend, der an den Traktor angehängt ist, wobei der Anhänger das Werkzeug, das Betätigungsmodul des Werkzeugs und das Satelliten-Positionierungsmodul trägt, wobei der Traktor zur Bestimmung seiner Positionierung ein weiteres Satelliten-Positionierungsmodul, eine Trägheitszentrale oder einen Rechner beinhaltet, der als Eingabe die Messungen übernimmt, die von dem Satelliten-Positionierungsmodul, mit dem der Anhänger ausgerüstet ist, durchgeführt werden, und ein kinematisches Modell der Maschine umsetzt, die aus dem Traktor und dem Anhänger gebildet wird.

10. System, Folgendes beinhaltend:
- ein Rechenmittel, das dazu vorgesehen ist, einen Bewirtschaftungsplan eines Grundstücks auszuarbeiten und aus dem Bewirtschaftungsplan einen Aussaatplan und einen Aufbereitungsplan zu extrahieren;
- eine erste Maschine, die dazu vorgesehen ist, ein Saatkorn einer ersten Spezies gemäß dem Aussaatplan zu säen; und
- eine zweite Maschine entsprechend jener nach einem der Ansprüche 1 bis 9, die dazu vorgesehen ist, einen Aufbereitungsvorgang des bepflanzten Grundstücks entsprechend dem Aufbereitungsplan durchzuführen.

11. System nach Anspruch 10, das ein Mittel zum Bestimmen einer Fahrstrecke unter Einschränkung beinhaltet, welche die zweite Maschine einzuhalten hat, um den Aufbereitungsvorgang durchzuführen, wobei die Einschränkung darin besteht, durchzusetzen, dass an jedem Punkt der Fahrstrecke eine Spur der Maschine in keine Spur eingreift, die einer bereits gepflanzten Pflanze zugewiesen ist.

12. Landwirtschaftliches Verfahren, das zur Durchführung einer Aufbereitung eines mit einer ersten Spezies bepflanzten Grundstücks Folgendes beinhaltet, wobei die geografischen Punkte, an denen Pflanzen der ersten Spezies gepflanzt wurden bekannt sind;
- einen Schritt zum Ausarbeiten eines Aufbereitungsplans des bepflanzten Grundstücks in Abhängigkeit von dem bei der Aufbereitung durchzuführenden landwirtschaftlichen Vorgang und den geografischen Punkten, an denen Pflanzen der ersten Spezies gepflanzt wurden, die bekannt sind, wobei der Aufbereitungsplan eine Vielzahl von geografischen Aufbereitungspunkten beinhaltet; und
- einen Aufbereitungsschritt, anhand einer landwirtschaftlichen Maschine (10), die mit einem Werkzeug (30) ausgerüstet ist, das angepasst und automatisch von einem Betätigungsmodul (32) betätigt wird, der darin besteht, zu jedem Zeitpunkt eine absolute und auf den Zentimeter genaue Position des Werkzeugs zu bestimmen, indem eine Verarbeitung der empfangenen Funknavigationssignale durchgeführt wird, die Korrekturen in Bezug auf Störungen berücksichtigt, die die Ausbreitung der Funknavigationssignale, die von jedem der sichtbaren Funknavigationssatelliten ausgegeben werden, trifft, und die durch die Ionosphäre induziert werden, und die Betätigungseinheit in Abhängigkeit von der absoluten Position des Werkzeugs und eines laufenden geografischen Aufbereitungspunktes zu steuern, der aus dem Aufbereitungsplan ausgewählt wird:
- einen Schritt zum Bestimmen einer Fahrstrecke, die eine Fortbewegung der Maschine über das Grundstück derart ermöglicht, dass das Werkzeug einen Aufbereitungsvorgang für jeden Punkt des Aufbereitungsplans durchführen kann.

13. Verfahren nach Anspruch 12, **dadurch gekennzeichnet, dass**, wenn das Werkzeug ein Werkzeug (30) zum Auflockern ist, die Aufbereitungspunkte des Aufbereitungsplans den Punkten entsprechen, an denen Pflanzen der ersten Spezies gepflanzt worden sind, und der Aufbereitungsschritt darin besteht, das Werkzeug zu betätigen, um den Boden um jeden der Auflockerungspunkte herum aufzulockern.

14. Verfahren nach Anspruch 12, **dadurch gekennzeichnet, dass**, wenn das Werkzeug ein Werkzeug zum Säen ist, die Aufbereitungspunkte des Aufbereitungsplans geografischen Punkten entsprechen, an denen Saatkörner einer zweiten Spezies auszusäen sind, und dadurch, dass der Schritt zum Aufbereiten darin besteht, Saatkörner der zweiten Spezies an jedem der Aufbereitungspunkte auszusäen.

15. Verfahren nach einem der Ansprüche 12 bis 14, **dadurch gekennzeichnet, dass** es einen Schritt zum Definieren eines Bewirtschaftungsplans eines Grundstücks, einen Schritt des Pflanzens der ersten Spezies gemäß einem Aussaatplan, der aus dem Bewirtschaftungsplan extrahiert wird, und mindestens einen Schritt zur Aufbereitung gemäß einem Aufbereitungsplan beinhaltet, der aus dem Bewirtschaftungsplan extrahiert wird.

16. Verfahren nach einem der Ansprüche 12 bis 15, einen Schritt zum Bestimmen einer optimalen Fahrstrecke zur Aufbereitung beinhaltend, die es von der Maschine zu verfolgen gilt, damit das Werkzeug den erforderlichen landwirtschaftlichen Vorgang durchführt, Schritt, im Laufe dessen die Einschränkung berücksichtigt wird, laut der, an jedem Punkt der Fahrstrecke eine Spur der Maschine in keine Spur eingreifen darf, die einer bereits gepflanzten Pflanze zugewiesen ist.

## Claims

1. An agricultural revisit machine (10) to carry out a revisit operation of a planted plot, including a tool (30) actuated by an actuating module (32), which includes a calculator (50) able to compare the absolute position of the tool and an absolute position of a current revisit point, selected from revisit points of a revisit plan stored in the memory means of the calculator, the calculator being able to control the actuating module depending on the relative distance between the absolute position of the tool and the absolute position of the current revisit point, and whose calculator (50) is able to determine a path allowing the displacement of the machine through the plot so that the tool can perform the revisit operation for each point of the revisit plan, **characterized in that** it includes a dual-frequency satellite positioning module (40), able to take into account corrections related to the disturbances affecting the propagation of the radionavigation signals emitted by each of the visible radionavigation satellites and which are induced by the ionosphere, so as to determine, at any time, an absolute position and precise to the nearest centimeter of the tool.

2. The machine (10) according to claim 1, wherein the tool (30) is a tool for hoeing, and in that said revisit plan includes a plurality of revisit points, each revisit point corresponding to a point of the plot where a plant of a first plant species has been planted, and in that the calculator (50) is able to control the actuating module (32) of the tool (30) to hoe the soil around a current revisit point selected in the revisit plan.

3. The machine (10) according to claim 1, **characterized in that**, a first plant species having been planted on the plot, the tool is a tool for sowing a seed of a second plant species, and **in that** each of the revisit points corresponds to a point of the plot where a seed of the second species must be sown.

4. The machine (10) according to any one of claims 1 to 3, **characterized in that** the calculator (50) is able to select the current revisit point of the revisit plan depending on a path followed by the machine (10) through the plot.

5. The machine according to claim 1, wherein the path is determined under constraint, the constraint consisting of imposing, at any point of the path, the imprint of the machine (260, 261, 262; 270, 271, 272, 273) that does not interfere with an imprint (251; 252, 254, 256) associated with an already planted plant.

6. The machine according to claim 5, wherein the imprint of the machine and the imprint associated with an already planted plant are of the soil imprint or steric imprint type.

7. The machine (10) according to any one of claims 1 to 6, wherein the satellite positioning module (40) incorporates means for acquiring corrections broadcasted by a reference stations network.

8. The machine according to claim 7, wherein the satellite positioning module (40) implements an algorithm for processing radionavigation signals of the PPP type with resolution of undifferentiated integer ambiguities.

9. The machine according to any one of the preceding claims, including a tractor and a trailer, coupled to the tractor, the trailer carrying the tool, the tool actuating module and the satellite positioning module, the tractor including, for the determination of its positioning, another satellite positioning module, an inertial unit or a calculator taking as input the measurements performed by the satellite positioning module equipping the trailer and implementing a kinematic model of the machine formed by the tractor and the trailer.

10. A system including:
- a calculation means able to develop a business plan of the plot and to extract a sowing plan and a revisit plan from said business plan;
- a first machine able to sow a seed of a first species in accordance with the sowing plan; and
- a second machine, in accordance with the one defined by any one of claims 1 to 9, able to perform a revisit operation of the planted plot, in accordance with the revisit plan.

11. The system according to claim 10, including means for determining under constraint a path which the second machine must follow to perform the revisit operation, the constraint consisting of imposing, that at any point of the path, an imprint of the machine does not interfere with an imprint associated with an already planted plant.

12. A method for the agriculture, which includes, to perform a revisit of a planted plot of a first species, the geographical points where plants of the first species were planted being known;
- a step of developing a revisit plan of the planted plot depending on the agricultural operation to be performed during the revisit and the geographical points where plants of the first species have been planted being known, the revisit plan including a plurality of revisit geographical points; and,
- a step of revisiting, by means of an agricultural machine (10) equipped with a tool (30) adapted and automatically actuated by an actuating module (32), consisting of determining an absolute position and precise to the nearest centimeter of the tool at each instant, by implementing a process of the received radionavigation signals, which takes into account corrections related to the disturbances affecting the propagation of the radionavigation signals emitted by the visible radionavigation satellites and which are induced by the ionosphere, and to control the actuating unit depending on the absolute position of the tool and a geographical point of a current revisit, selected in the revisit plan;
- a step of determining a path allowing a displacement of the machine through the plot so that the tool can perform the revisit operation for each point of the revisit plan.

13. The method according to claim 12, **characterized in that**, the tool being a tool (30) for hoeing, the revisit points of the revisit plan correspond to points where plants of the first species have been planted, and the revisiting step consists of actuating the tool to hoe the soil around each revisit point.

14. The method according to claim 12, **characterized in that**, the tool being a tool for sowing, the revisit points of the revisit plan correspond to geographical points where seeds of a second species must be sown, and **in that** the revisiting step consists of sowing seeds of the second species in each of the revisit points.

15. The method according to any one of claims 12 to 14, **characterized in that** it includes a step of defining a business plan of a plot, a step of planting the first species according to a sowing plan extracted from the business plan, and at least one revisiting step according to a revisit plan extracted from the business plan.

16. The method according to any one of claims 12 to 15, including a step of determining an optimal revisit path to be followed by the machine so that the tool performs the required agricultural operation, a step during which the constraint is taken into account according to which, at any point of the path, an imprint of the machine must not interfere with an imprint associated with an already planted plant.
